# EUROPEAN PATENT SPECIFICATION

(11) **EP 3 223 595 B1**
(45) Date of publication and mention of the grant of the patent: **12.01.2022**
(21) Application number: 15817603.2
(22) Date of filing: 23.11.2015
(51) Int. Cl.: A01B 69/00

(54) **AGRICULTURAL IMPLEMENT FOR SOIL WORKING, HAVING STEERABLE AXLES**
LANDWIRTSCHAFTLICHES ANBAUGERÄT MIT ANLENKBAREN ACHSEN ZUR BODENBEARBEITUNG
OUTIL AGRICOLE POUR LE TRAVAIL DU SOL, AVEC DES ESSIEUX DIRIGEABLES

(30) Priority: 24.11.2014 SE 1451417
(43) Date of publication of application: 04.10.2017
(73) Proprietor: Väderstad Holding AB, 590 21 Väderstad (SE)
(72) Inventor: GYLLENHAMMAR, Per, 591 45 Motala (SE); JOHANSSON, Henrik, 590 47 Vikingstad (SE); STARK, Crister, 590 21 Väderstad (SE)
(74) Representative: AWA Sweden AB
(86) International application number: PCT/SE2015/051256
(87) International publication number: WO 2016/085390

(56) References cited:
- EP-A1- 1 336 549
- WO-A1-00/73123
- CA-A1- 2 360 469
- DE-A1- 19 746 927
- FR-A1- 2 860 126
- US-A1- 2009 236 108
- US-A1- 2013 255 974

## Description

### Technical domain

This document relates to agricultural implements including cultivating tools such as sowing machines. The concept set out in this document is also applicable to other types of cultivating agricultural implements, such as manure spreaders, pesticide spreaders, harrows and cultivators, and to combinations thereof.

### Background

Historically seen, agricultural implements for dispensing materials or liquids to the soil have been equipped with a container for seeds, manure or pesticides, which was placed on the agricultural implement. In the case of sowing machines, the container was originally of the same width as the sowing machine itself.

As tractors and agriculture increased in size and scale, new solutions were required and, for example, sowing machines often became pneumatic, in other words the seeds were dispensed from a container to the seed drills via tubes by a fan-driven air flow which meant that machines with a large operating width could be built. As the machines became ever larger, the requirements relating to the volume of seeds/manure/chemical agents that could be carried also increased. As it became difficult to carry the increasing volume (weight) in one container on the sowing machine a solution came about with a container (a "cart") connected in front of or behind the sowing machine. This cart makes it possible to carry larger quantities of seeds and manure.

A disadvantage of this embodiment is that the sowing machines are becoming longer and must be provided with more than one wheel axle in order to distribute the weight of the machine over a larger area on the ground. A multi-axle agricultural machine has a tendency to make narrow turns after the traction vehicle when the traction vehicle turns, which means that the traction vehicle has to widen the curve and turn with a greater turning radius if the traction vehicle and the following agricultural machine, for example, have to turn or avoid an obstacle. As agricultural machines considerably cut corners, i.e. the agricultural machine does not follow the traction vehicle's tracks, due to roundabouts, speed bumps, buildings, signs and other obstacles, the machines are difficult to move on roads, for example, or other locations where the agricultural implement may conceivably be driven. Even when turning in fields this type of machine is cumbersome, particularly if the field is small and/or irregular in shape.

In SE 515 956 an cultivating machine is shown where a linking arm is connected to a front wheel axle and is connected in an articulated manner to a frame arranged on the cultivating machine around an essentially vertical first axle. A control element is arranged between the drawbar, which is connectable to a traction vehicle, and the frame in order to control the rotation of the linking arm around the first axle when the traction vehicle turns, so that the agricultural implement turns at least less than the traction vehicle.

Other examples of prior art are disclosed in FR2860126, US2009236108A1, US4579362, DE 197 46 927 A1 and in CA 2 360 469 A1.

### Summary

One aim is to provide an alternative or improved agricultural implement for cultivation with controllable axles which is easily manoeuvrable and simple to move.

Brought about in accordance with a first aspect is an agricultural implement for cultivation comprising a drawbar for coupling the agricultural implement to a traction vehicle by means of a pull coupling, a front frame section at the separate lateral end sections of which front wheels are arranged via respective swivel axles, wherein the drawbar is articulated relative to the front frame section around at least one vertical axle. The agricultural implement also comprises linking arms which connect the swivel axles with the drawbar so that the front wheel turns when the drawbar turned relative to the front frame section and at least one first container for dispensable material, the centre of gravity of which at least on maximum loading is between the front frame section and the pull coupling, said container being fixed in relation to the drawbar.

An agricultural implement for cultivation is taken to mean an agricultural implement such as a sowing machine, but also other types of cultivating agricultural implements such as spreaders for manure, lime or pesticides, harrow, cultivators or combinations thereof.

A container is taken to mean a container for dispensing solid or liquid material such as grain, plants, manure, pesticides or soil improvement agents (lime, humus etc.) to the soil over which the agricultural implement is being driven. The container can be of the type provided with a fan for generating an air pressure for dispensing the material.

"Vertical axle" is here taken to mean an axle that is vertical when the agricultural implement is on a horizontal surface.

A "frame section" in the broadest sense of the term can be a beam, of arbitrary cross-section, usually rectangular or circular. As an alternative a frame section can be an assembly of joined beams which are arranged so that when the agricultural implement is set up on level ground and in operational condition it extends in at least two horizontal directions, which can, but do not have to be, at right angles to each other. The frame section can essentially extend in one plane, but it can also be concave or convex upward or downward The frame section can also have upwardly or downwardly projecting parts, for example to form fastening points for wheels (support wheels or transporting wheels).
As a further alternative a frame section can have the function of supporting one or more further frame sections. The frame section is formed of an essentially rigid unit, i.e. a unit which is not deformed beyond deformation of the material under stress.

The positioning of the container means that both the traction vehicle and the agricultural implement are loaded by the container's weight (plus the weight of any content of the container).

When the agricultural implement is connected to the traction vehicle, e.g. a tractor, the drawbar controls the front wheels of the agricultural implement via linking arms and swivel axles in such a way that the agricultural implement follows the traction vehicle in a predetermined manner. Hence an agricultural implement for cultivation is obtained which is easily manoeuvrable and simple to move.

The linking arms and swivel axles can be designed so that the front wheels turn less than the traction vehicle.

The front wheels of the agricultural implement can then be controlled so that the turns with too small an angle whereby the agricultural implement is forced to turn with a larger radius than if the front wheels were not understeered, i.e. the agricultural implement is made to follow the traction vehicle's tracks. The traction vehicle does not therefore have to turn with same turning radius as it would if the wheels were not understeered if the traction vehicle and the following agricultural implement have to turn or avoid an obstacle.

The agricultural implement can also comprise a tool section which, horizontally, is not, or only to a limited extent, connected in a swivelling manner to the front frame section.

"Horizontally swivelling manner" means swivelling about a vertical geometrical axis.

The fact that the tool section is horizontally connected in a swivelling manner to the front frame section to a limited extend means that a turn of maximum 10°, preferably maximum 5° is nevertheless permitted.

The agricultural implement can also comprise at least two pivot wheels which are arranged at a greater distance from a central axle on the agricultural implement extending in an forward travel direction than the front wheel.

In a non-claimed aspect, there is an agricultural implement for cultivation comprising a drawbar for coupling the agricultural implement to a traction vehicle, a front frame section at the separate lateral end sections of which front wheels are arranged via respective swivel axles, wherein the drawbar is articulated relative to the front frame section around at least one vertical axle. The agricultural implement comprises further linking arms which connect the swivel axles with the drawbar so that the front wheel turns when the drawbar is turned relative to the front frame section. The agricultural implement also comprises a longitudinal frame section which is articulated relative to the drawbar around at least one vertical axle, and a rear frame section which is articulated relative to a rear end section of the longitudinal frame section around the vertical axle. The agricultural implement also comprises rear wheels which attached to laterally separate end parts of the rear frame section via rear swivel axles and rear linking arms which connect the rear swivel axles with the longitudinal frame section so that the rear wheels turn when the longitudinal frame section is turned relative to the rear frame section.

The agricultural implement in accordance with the second aspects makes it possible for long or very long agricultural implements to be easily manoeuvred or moved as the front wheels and rear wheels are controlled in such a way that the agricultural implement follows the traction vehicle in a predetermined manner.

The agricultural implement can also comprise at least one other container for dispensable material, the centre of gravity of which, at least under maximum loading, is located between the front and rear frame sections.

In the case of the agricultural implement in accordance with this aspect, the agricultural implement can be provided with a larger container than in the case of the agricultural implement in accordance with the first aspect.

The other container can be fixed in relation to the longitudinal frame section.

The agricultural implement can also comprise at least one first container for dispensable material which is at least partially arranged between the front frame section and the pull coupling.

The centre of gravity of the first container can, at least at maximum load, can be located between the front frame section and the pull coupling so that both the traction vehicle and the agricultural implement are loaded by the container's weight (plus the weight of any content of the container). The first container can be fixed in relation to the drawbar.

An agricultural implement provided with both a first and a second container means that at larger volume of solid or liquid material for dispensing to the ground over which the agricultural implement is being driven can be carried with the agricultural implement than with an agricultural implement provided with only a first or a second container.

The swivel joints and linking arms can be designed so that the front wheel and/or rear wheel turns less than the traction vehicle.

The agricultural implement can also comprise a tool section which, horizontally, is not, or only to a limited extent, connected in a turning manner to the rear frame section.

The agricultural implement can also comprise at least two pivot wheels which are arranged at a greater distance from a central axle on the agricultural implement extending in a forward travel direction than the front wheels and/or rear wheels.

In both the first and second aspect of the agricultural implement the tool section can be of greater width in a direction perpendicular to the forward travel direction than the front frame section.

In both the first and second aspect of the agricultural implement the tool section comprises a plurality of cultivating tools selected from a group comprising harrow tines, cultivator tines, levelling tools, disk tools, deep picking tools, roller units, packer wheels and material dispensing systems.

### Brief description of the drawings

Fig 1 shows a view from above of an agricultural implement in accordance with a first form of embodiment but without containers.
Fig 2 shows a view from above of an agricultural implement with containers in accordance with a first form of embodiment connected to a traction vehicle and provided with a tool section.
Fig 3 shows a view from above of an agricultural implement in accordance with a not claimed example.
Fig 4 shows a view from above of an agricultural implement in accordance with fig. 2 connected to a traction vehicle and provided with a tool section.
Fig 5 shows a view from above of an agricultural implement in accordance with a not claimed example in which the agricultural implement is equipped with containers, connected to a traction vehicle and provided with a tool section.
Fig 6 shows a side view of the agricultural implement in fig. 5 equipped with a different tool section from that in fig. 5.

### Description of forms of embodiment

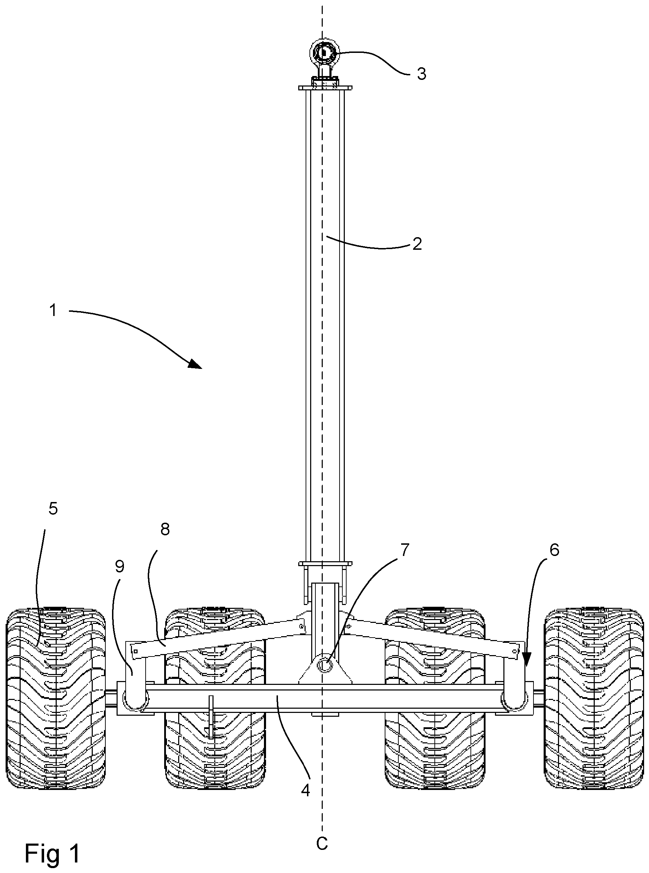

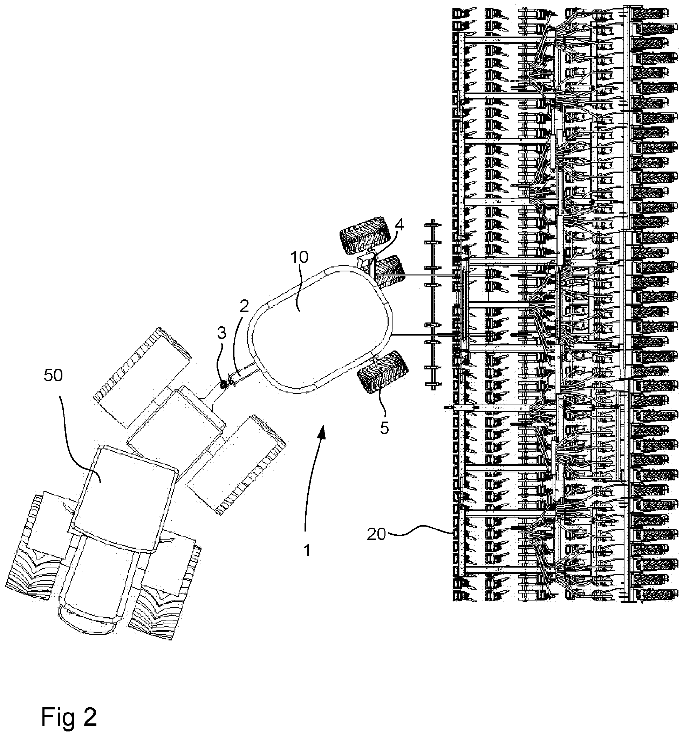

With reference to figs. 1 and 2, an agricultural implement 1 for cultivation in accordance with a first form of embodiment comprises a drawbar 2 for coupling the agricultural implement 1 to a traction vehicle 50 (e.g. a tractor as in fig. 2) by means of a pull coupling 3. An agricultural implement 1 for cultivation is taken to mean an agricultural implement such as sowing machines (shown in fig. 2), but also other types of cultivating agricultural implements such as spreaders for manure, lime or pesticides, harrow, cultivators (shown in fig. 2) and combinations thereof.

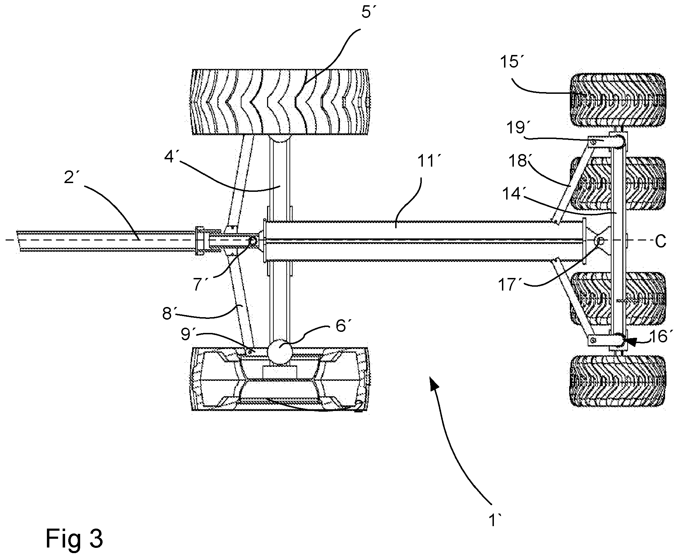

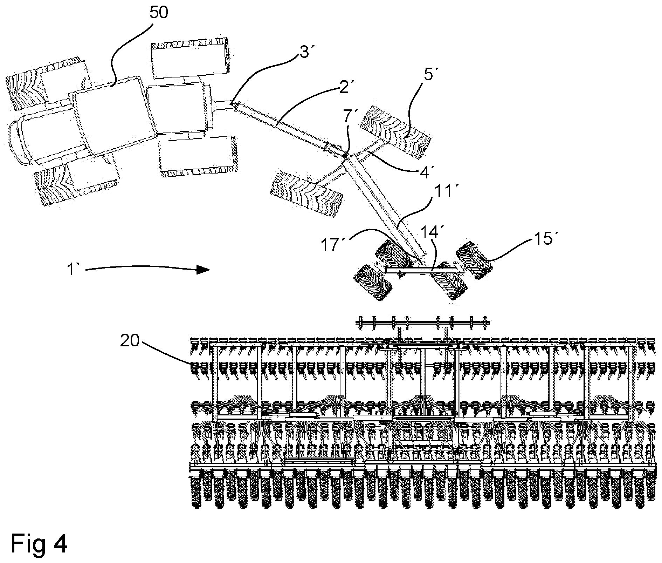

A transverse front frame section 4 in the example is provided with front wheels 5 in lateral separate end sections of the frame section 4. The front wheels 5 are connected to the frame section 4 via a swivel axle 6 in each case. In figs. 1 and 2 double wheel pairs are shown, but the number of wheels 5 arranged on the front frame section 5 can also be two, as shown in figs. 3 and 4 for an agricultural implement in accordance with a different form of embodiment. Alternatively, more than five wheels 5, i.e. six or eight wheels 5, can be arranged on the front frame section 4 via respective swivel axles 6.

The drawbar 2 is articulated relative to the front frame section 4 around at least one vertical axle 7, i.e. an axle 7 that is vertical when the agricultural implement 1 is on horizontal surface.

The agricultural implement 1 further comprises linking arms 8, 9 which connect the swivel axles 6 with the drawbar 2 so that the front wheel 5 turns when the drawbar 2 is turned relative to the front frame section 4. Figure 2 shows how the front wheels 5 turn when the drawbar 2 is turned relative to the front frame section 4 when the traction vehicle 50 turns. The number of linking arms can vary but is preferably two.

The presence of swivel axles 6 means that the wheels of the agricultural implement 1 have an essentially retained support surface, even in the case of sharp turning.

A container 10 for dispensable material, which is fixed in relation to the drawbar 2 is positioned so that its centre of gravity, at least on maximum loading, is between the front frame section 4 and the pull coupling 3 on the agricultural implement 1.

The container 10 is a container for dispensing solid or liquid material such as grain, plants, manure, pesticides or soil improvement agents (lime, humus etc.) to the soil over which the agricultural implement 1 is being driven. The container 10 can be of the type provided with, or connected to, a fan for generating an air pressure for dispensing the material, as it often the case with sowing machines.

The positioning of the container 10, see figure 2, means that both the traction vehicle 50 and the agricultural implement 1 are loaded by the weight of the container 10 (plus the weight of any content of the container).

It is desirable to distribute the weight between the traction vehicle and front wheels 5 of the agricultural implement 1 so that a positive, but not too large, load is brought about on the pull coupling 3. For this the load must preferably not be negative, i.e. have a lifting effect on the pull coupling 3.

Normally there is an upper limit to how much the pull coupling 3 can be loaded. The proportion of the weight of the container 10 and any content placed on the pull coupling can make up 10% - 90% of the pull coupling's maximum loading, preferably 20% - 75% or 20% - 50% of the pull coupling's maximum loading. For this it is often desirable to load the front wheel 5 with at least 50%, preferably at least 60% or at least 70% of the load of the container 10 and any content.

When the agricultural implement is connected to the traction vehicle 50, the drawbar controls the front wheels 5 of the agricultural implement 1 via linking arms 8, 9 and swivel axles 6 in such a way that the agricultural implement 1 follows the traction vehicle 10 in a predetermined manner. Hence an agricultural implement 10 for cultivation is obtained which is easily manoeuvrable and simple to move.

The swivel axles 6 and linking arms 8, 9 can be designed so that the front wheels 5 turn less than the traction vehicle 50.

Thus the front wheel 5s of the agricultural implement can then be controlled so that they turn with too small an angle whereby the agricultural implement 1 is forced to turn with a larger radius than if the front wheels were not understeered, i.e. the agricultural implement 1 is made to follow the traction vehicle's 50 tracks.

A tool section 20, see fig. 2, may horizontally not, or only to a limited extent, be connected in a swivelling manner to the front frame section 4. Fig. 2 shows a tool section 20 in the form of a sowing machine comprising levelling tools, disk tools, row spacing units and packer wheels.

As shown in fig. 2, the tool section 20 can have a greater width in a direction perpendicular to the forward travel direction than a front frame section 2. The tool section 20 can comprises a plurality of cultivating tools selected from a group comprising harrow tines, cultivator tines, levelling tools, disk tools, deep picking tools, roller units, packer wheels and material dispensing systems.

The agricultural implement 1 can also be provided with at least two pivot wheels (not shown) which are arranged at a greater distance from a central axle C on the agricultural implement 1 extending in a forward travel direction than the front wheel 5. The pivot wheel provides additional support and stress-relief and can also be used in the case of depth control of the tool section 20.

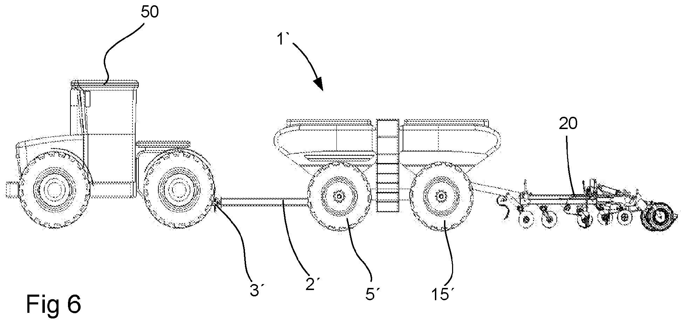

With reference to figs. 3 to 6, an agricultural implement 1' according to a not claimed example comprises a drawbar 2' for coupling the agricultural implement 1' to a traction vehicle 50 by means of a pull coupling 3'. A transverse front frame section 4' in the example is provided with front wheels 5' in lateral separate end sections of the frame section 4'. The front wheels 5' are connected via respective front swivel axles 6' to the frame section 4'. The drawbar 2' is articulated relative to the front frame section 4' around at least one vertical axle 7'. The agricultural implement 1' also comprises front linking arms 8', 9' which connect the swivel axles 6' with the drawbar 2' so that the front wheel 5' turns when the drawbar 2' is turned relative to the front frame section 4'.

In thus far the agricultural implement 1' in accordance not claimed example resembles the agricultural implement 1 in accordance with the first example of embodiment. However, the agricultural implement 1' in accordance with the not claimed example also comprises a longitudinal frame section 11' which at a front end section is articulated relative to the drawbar 2' around at least one vertical axle 7', and an, in the example, transverse rear frame section 14' which is articulated relative to a rear end section of the longitudinal frame section 11' around a vertical axle 17', i.e. an axle 7' which is vertical when the agricultural implement 1 is on a horizontal surface. Rear wheels 15' which are attached at the rear frame section in laterally separate end sections via respective rear swivel axles 16'. In figs. 3 and 4 double wheel pairs are shown, but the number of wheels 15' arranged on the rear frame section 14' can also be two, or more than four wheels 15', e.g. six or eight wheels 15'.

Rear linking arms 18', 19' which connect the rear swivel axles 16' with the longitudinal frame section 11' so that the rear wheel 15' turns when the longitudinal frame section 11' is turned relative to the rear frame section 14'. The number of linking arms connecting the swivel axles 16' to the longitudinal frame section 11' can vary but is preferably two.

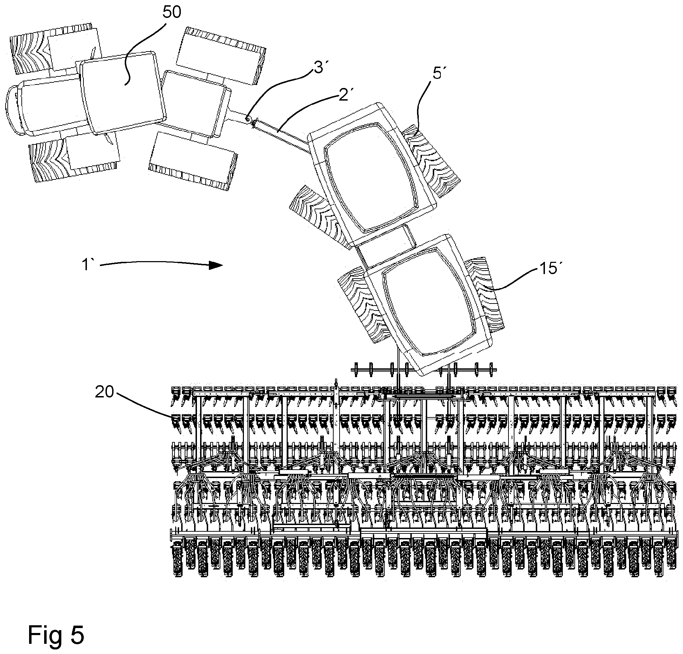

Figures 4 and 5 show how the front wheels 5' and rear wheels 15' turn when the drawbar 2 is turned relative to the front frame section 4' and the longitudinal frame section 11' is turned relative to the rear frame section 14' when the traction vehicle 50 turns.

The agricultural implement 1' in accordance with a not claimed example makes it possible for long or very long agricultural implements 1' to be easily manoeuvred or moved as the front wheels 5' and rear wheels 15' are controlled in such a way that the agricultural implement 1' follows the traction vehicle 50 in a predetermined manner.

The swivel axles 8', 9', 18', 19' and linking arms can be designed so that the front wheels 5 and/or the rear wheels 15 turn less than the traction vehicle 50, as shown in fig. 4 and 5.

The agricultural implement 1' in accordance with the second form of embodiment comprises a container for dispensable material, the centre of gravity of which, at least under maximum loading, is located between the front and rear frame sections 4', 14' (not shown). The container can be fixed in relation to the longitudinal frame section 11'.

The agricultural implement 1' in accordance with a not claimed example can be provided with larger containers than the agricultural implement 1 in accordance with the first form of embodiment described above.

The agricultural implement 1' in accordance with a not claimed example can alternatively also be provided with an additional container for dispensable material (not shown) which is at least partially arranged between the front frame section 4' and the pull coupling 3' and which can be fixed in relation to the drawbar 2'.

The centre of gravity of the additional container can, at least a maximum load, can be located between the front frame section 4' and the pull coupling 2' so that both the traction vehicle 50 and the agricultural implement 1' are loaded by the container's weight (plus the weight of any content of the container).

The additional container can be placed in the same place as the container 10 in the first form of embodiment of the agricultural implement 1 described above.

The agricultural implement 1' in accordance with the second form of embodiment can, just like the agricultural implement 1 in accordance with the first form of embodiment as described above, comprise a tool section 20 which in the second form of embodiment is horizontally not, or only to a limited extend, connected in a turning manner to the rear frame section 14', see figs. 4, 5 and 6.

The agricultural implement 1' can also comprise at least two pivot wheels which are arranged at a greater distance from a central axle C on the agricultural implement 1' extending in a forward travel direction than the front wheels 5' and/or rear wheels 15'.

Figures 4 and 5 show a tool section which is at a greater distance from the central axle (see fig. 3) than both the front wheels 5' and back wheels 15'.

As shown in fig. 4 and 5, the tool section 20 can have a greater width in a direction perpendicular to the forward travel direction than the front frame section 4'.

The tool section 20 in the second form of embodiment of the agricultural implement 1', can, in precisely the same way as the first form of embodiment, comprise a plurality of soil cultivating tools.

It can be seen that the transverse frame sections 4, 4', 14' can each be in the form of a beam as shown on the drawings, or in the form of other components which extend laterally between the wheels, for example, built up in accordance with the framework principle.

In the same way, a longitudinal frame section can be composed of one or more laterally central beams, or beams which, seen laterally, are anywhere between the central line C and wheel axle.

It can also be seen that an agricultural implement in accordance with the principles set out here can be designed with wheel axles which are fixed in relation to the front and/or rear section, wherein said front an/or rear frame section can be turned relative to a longitudinal frame section around a vertical axle. With such a a design, the entire transverse frame section should turn relative to the longitudinal frame section.

## Claims

1. Agricultural implement (1) for cultivation comprising:
a drawbar (2) for coupling the agricultural implement (1) to a traction vehicle (50) by means of a pull coupling (3),
a front frame section (4) at the separate lateral end sections of which front wheels (5) are arranged via respective swivel axles (6),
wherein the drawbar (2) is articulated relative to the front frame section (4) around at least one vertical axle (7),
linking arms (8, 9) which connect the swivel axles (6) with the drawbar (2) so that the front wheel (5) turns when the drawbar (2) is turned relative to the front frame section (4), and
**characterized in that**
at least one first container (10) for dispensable material, the centre of gravity of which at least on maximum loading is between the front frame section (4) and the pull coupling (3) and said container (10) being fixed in relation to the drawbar (2).

2. Agricultural implement according to claim 1, wherein the swivel axles (6) and linking arms (8, 9) are designed so that the front wheels (5) turn less than the traction vehicle (50).

3. Agricultural implement (1) according to any one of the preceding claims 1 or 2, also comprising a tool section (20) which, horizontally, is connected in a non-turning manner to said front frame section (4).

4. Agricultural implement (1) according to any one of previous claims 1 - 3, also comprising at least two pivot wheels which are arranged at a greater distance from a central axle (C) on the agricultural implement (1) extending in a forward travel direction than the front wheels (5).

5. Agricultural implement (1, 1') according to claim 3, wherein the tool section (20) has a greater width in a direction perpendicular to the forward travel direction than the front frame section (4, 4').

6. Agricultural implement (1, 1') according to claim 3,wherein the tool section (20) comprises a plurality of cultivating tools selected from a group comprising harrow tines, cultivator tines, levelling tools, disk tools, deep picking tools, roller units, packer wheels and material dispensing systems.

## Patentansprüche

1. Landwirtschaftliches Gerät (1) zur Bodenbearbeitung, das Folgendes umfasst:
eine Zugstange (2) zum Kuppeln des landwirtschaftlichen Geräts (1) an ein Zugfahrzeug (50) mit Hilfe einer Zugkupplung (3),
eine vordere Rahmensektion (4), an deren seitlichen Endsektionen über jeweilige Pendelachsen (6) Vorderräder (5) angeordnet sind,
wobei die Zugstange (2) im Verhältnis zu der vorderen Rahmensektion (4) um wenigstens eine vertikale Achse (7) angelenkt ist, Verbindungsarme (8, 9), welche die Pendelachsen (6) so mit der Zugstange (2) verbinden, dass sich das Vorderrad (5) eindreht, wenn die Zugstange (2) im Verhältnis zu der vorderen Rahmensektion (4) eingedreht wird, und
**gekennzeichnet durch**
wenigstens einen Behälter (10) für abzugebendes Material, dessen Schwerpunkt bei maximaler Last sich zwischen der vorderen Rahmensektion (4) und der Zugkupplung (3) befindet und **dadurch**, dass der Behälter (10) im Verhältnis zu der Zugstange (2) fixiert ist.

2. Landwirtschaftliches Gerät nach Anspruch 1, wobei die Pendelachsen (6) und die Verbindungsarme (8, 9) so gestaltet sind, dass sich die Vorderräder (5) weniger eindrehen als das Zugfahrzeug (50).

3. Landwirtschaftliches Gerät (1) nach einem der vorhergehenden Ansprüche 1 oder 2, die ebenfalls eine Werkzeugsektion (20) umfasst, die, in Horizontalrichtung, auf eine nicht-eindrehende Weise an der vorderen Rahmensektion (4) befestigt ist.

4. Landwirtschaftliches Gerät (1) nach einem der vorhergehenden Ansprüche 1 bis 3, die ebenfalls wenigstens zwei Schwenkräder umfasst, die in einer größeren Entfernung von einer Mittelachse (C) an dem landwirtschaftlichen Gerät (1), die sich in einer Vorwärts-Fahrtrichtung erstreckt, angeordnet sind als die Vorderräder (5).

5. Landwirtschaftliches Gerät (1, 1') nach Anspruch 3, wobei die Werkzeugsektion (20) eine größere Breite in einer Richtung, senkrecht zu der Vorwärts-Fahrtrichtung, aufweist als die vordere Rahmensektion (4, 4').

6. Landwirtschaftliches Gerät (1, 1') nach Anspruch 3, wobei die Werkzeugsektion (20) eine Vielzahl von Bodenbearbeitungswerkzeugen umfasst, die ausgewählt sind aus einer Gruppe, die Eggenzinken, Grubberzinken, Planierwerkzeuge, Scheibenwerkzeuge, tiefe Erntewerkzeuge, Walzeneinheiten, Packerräder und Materialabgabesysteme umfasst.

## Revendications

1. Outil agricole (1) pour la culture comprenant :
un timon (2) pour accoupler l'outil agricole (1) à un véhicule de traction (50) au moyen d'un attelage de traction (3),
une section de châssis avant (4) au niveau des sections d'extrémité latérales séparées dont les roues avant (5) sont disposées via des essieux pivotants respectifs (6),
dans laquelle le timon (2) est articulé par rapport à la section de châssis avant (4) autour d'au moins un axe vertical (7),
des bras de liaison (8, 9) qui raccordent les essieux pivotants (6) au timon (2) de sorte que la roue avant (5) tourne lorsque le timon (2) est tourné par rapport à la section de châssis avant (4), et
**caractérisé en ce qu'**au moins un premier conteneur (10) pour produit jetable, dont le centre de gravité au moins sur le chargement maximum se situe entre la section de châssis avant (4) et l'attelage de traction (3) et ledit conteneur (10) étant fixé par rapport au timon (2).

2. Outil agricole selon la revendication 1, dans lequel les essieux pivotants (6) et les bras de liaison (8, 9) sont conçus de sorte que les roues avant (5) tournent moins que le véhicule de traction (50).

3. Outil agricole (1) selon une quelconque des revendications précédentes 1 ou 2, comprenant également une section d'outil (20) qui, horizontalement, est raccordée de manière non tournante à ladite section de châssis avant (4).

4. Outil agricole (1) selon une quelconque des revendications précédentes 1 à 3, comprenant également au moins deux roues pivotantes qui sont disposées à une plus grande distance d'un axe central (C) sur l'outil agricole (1) s'étendant dans une direction d'avancement que les roues avant (5).

5. Outil agricole (1, 1') selon la revendication 3, dans lequel la section d'outil (20) possède une plus grande largeur dans une direction perpendiculaire à la direction d'avancement que la section de châssis avant (4, 4').

6. Outil agricole (1, 1) selon la revendication 3, dans lequel la section d'outil (20) comprend une pluralité d'outils de culture choisis dans un groupe comprenant des dents de herse, des dents de cultivateur, des outils de nivellement, des outils à disques, des outils de ramassage profond, des unités à rouleaux, des roues d'emballeuse et des systèmes de distribution de matériaux.
